Europäisches Patentamt

European Patent Office

Office européen des brevets

(11) Numéro de publication: **0 146 480**
**A1**

## (12) DEMANDE DE BREVET EUROPEEN

(21) Numéro de dépôt: **84420191.3**

(22) Date de dépôt: **09.11.84**

(51) Int. Cl.⁴: **F 16 K 3/08,** F 16 K 27/04

(30) Priorité: **10.11.83 FR 8318161**

(43) Date de publication de la demande: **26.06.85**
**Bulletin 85/26**

(84) Etats contractants désignés: **BE CH DE FR GB IT LI NL SE**

(71) Demandeur: **Etablissements MINGORI, 141, rue Rambuteau, F-71000 Macon (FR)**

(72) Inventeur: **Bourbon, Georges Alain, 11, Parc Grand Soleil, F-69300 Caluire (FR)**

(74) Mandataire: **Karmin, Roger, Cabinet MONNIER 150, cours Lafayette, F-69003 Lyon (FR)**

(54) Tête de robinet perfectionée.

㉗ Elle comprend un corps tubulaire (3) pourvu d'un rebord annulaire inférieur (3a) sur lequel repose un premier disque de céramique (2') par l'intermédiaire d'un joint (4). Sur ce disque, un second disque identique (2), mais retourné, est appliqué par l'extrémité inférieure d'un boisseau tournant (1). Ce dernier comporte un pied (1c) s'engageant dans une fente de même forme (2a) du disque supérieur (2) de manière qu'il puisse tourner par rapport au premier en vue de mettre leurs lumières (2b, 2'b) en vis-à-vis ou de les décaler.

Installation sanitaire.

1

La présente invention se réfère aux perfectionnements apportés aux têtes de robinet de puisage et plus particulièrement, bien que non exclusivement, à celles que l'on utilise à titre de rechange sur des robinets existants.

On sait que l'inconvénient principal des têtes de robinet connues consiste dans le fait que l'arrêt de l'écoulement du liquide s'effectue au moyen d'un clapet en caoutchouc dont la durée de vie est relativement brève, de telle sorte que très souvent les robinets ferment mal. Un inconvénient secondaire est dû au fait que le siège du clapet se corrode par l'action du calcaire.

Pour remédier aux inconvénients précités, on a déjà proposé de réaliser des têtes de robinet comportant un système d'arrêt composé de deux disques de céramique dont l'un est fixe et l'autre se déplace angulairement, ces deux disques étant pourvus de lumières convenablement disposées afin que la manoeuvre s'effectue en gros en un quart de tour. Les têtes connues comportent un corps dont la partie inférieure, réalisée sous forme tubulaire, renferme les deux disques et un joint de caoutchouc sur lequel repose le disque fixe. Le corps est vissé dans l'entrée filetée du robinet, de telle sorte qu'en fin de vissage du corps en question, le joint inférieur prévu annulaire repose contre le siège du robinet, si bien que ce sont les deux disques qui obturent le passage du liquide.

Le principal inconvénient des têtes de robinet en question concerne la tolérance serrée qui doit exister entre le niveau du siège du robinet et le dessus de la partie filetée du corps recevant la tête. Cette tolérance doit être serrée puisqu'en fin de vissage de la tête de robinet, c'est la compression du joint annulaire inférieur qui détermine le serrage entre les deux disques. Cette tolérance, qui est de l'ordre de 2/10ème de millimètre, peut difficilement être respectée dans des installations anciennes dont les sièges peuvent avoir été rodés ou fraisés, de telle sorte qu'ils ne répondent plus à la norme en vigueur. Les têtes

0146480

2

connues comportent deux disques différents, l'un angulairement fixe par rapport au corps de la tête et l'autre mobile en rotation, c'est-à-dire associé à un boisseau tournant commandé par la clé du robinet.

Les perfectionnements qui font l'objet de la présente invention visent à remédier aux inconvénients des têtes de robinets à disques céramiques, et elle vise plus particulièrement à permettre la réalisation d'une tête du genre en question qui réponde mieux que jusqu'à présent aux divers desiderata de la pratique. En particulier, grâce à l'invention, la distance séparant le siège du dessus du corps du robinet peut varier dans des proportions importantes, c'est-à-dire de l'ordre de plus ou moins 0,5 mm. De plus, grâce à la disposition conforme à l'invention, on peut utiliser deux disques de céramique identiques, ce qui simplifie la fabrication, le stockage et les réparations. Enfin, le serrage des plaquettes est déterminé à la fabrication et ne dépend pas de la force d'appui de la tête de robinet sur le siège.

A cet effet, la tête de robinet suivant l'invention comporte un corps tubulaire dans lequel tourne le boisseau de commande du disque mobile, la base dudit corps comportant un rebord annulaire sur lequel le disque fixe repose par l'intermédiaire d'un joint d'étanchéité, tandis que ladite base comporte un joint annulaire qui vient prendre appui contre le siège du corps du robinet.

Les disques comportent des lumières en forme de secteur, permettant une manoeuvre complète d'ouverture et de fermeture sur environ un demi-tour, de telle sorte que l'ouverture ou la fermeture sont très progressives même à faible débit, ce dernier étant facilement réglé à la valeur voulue faible ou importante. Cette caractéristique présente donc un avantage appréciable par rapport aux têtes de robinet qui s'ouvrent suivant un quart de tour.

Le dessin annexé, donné à titre d'exemple, permettra de

0146480

3

mieux comprendre l'invention, les caractéristiques qu'elle présente et les avantages qu'elle est susceptible de procurer :

Fig. 1 est une vue éclatée des pièces principales d'une tête de robinet suivant l'invention, seule la partie inférieure du corps tubulaire ayant été représentée.

Fig. 2 est une coupe longitudinale d'une tête de robinet établie conformément à l'invention, représentée à la position ouverte par rapport au corps de robinet sur lequel elle est montée.

Fig. 3 en est une coupe suivant III-III, fig. 2;

Fig. 4 est une vue semblable à celle de fig. 2, mais illustrant le robinet en position fermée.

Fig. 5 en est une coupe suivant V-V, fig. 4.

Fig. 6 est une vue semblable à celle de fig. 1, mais illustrant une variante.

Fig. 7 montre les faces correspondantes du boisseau, des disques et du rebord inférieur du corps de la tête suivant l'invention, afin d'illustrer une variante d'assemblage de ces différentes pièces.

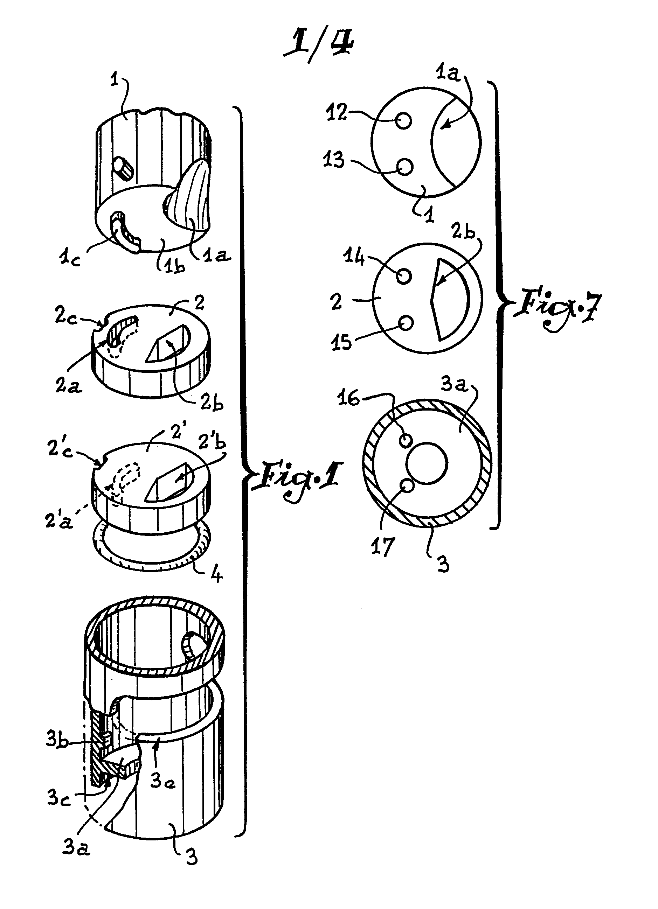

Comme illustré en fig. 1, la tête de robinet suivant l'invention comporte un boisseau 1 destiné à commander la rotation d'un disque en céramique 2, un second disque identique au premier, et qu'on a référencé 2' du fait qu'il est retourné par rapport à lui, et enfin la partie inférieure d'un corps tubulaire 3.

On observe que le boisseau 1 comporte une entaille 1a creusée partie dans sa base 1b et partie dans sa surface latérale. Comme on l'expliquera mieux plus loin, cette

4

entaille permet le passage du liquide en direction du bec du robinet. La base 1b du boisseau est pourvue d'un pied 1c en forme de croissant destiné à pénétrer dans une fente de même forme 2a ménagée sur une partie de l'épaisseur du disque 2. Ainsi, en faisant pénétrer le pied 1c dans la fente 2a, le disque supérieur 2 peut changer d'orientation angulaire lorsqu'on fait tourner le boisseau 1 dans le corps 3. Chaque disque comporte encore une lumière 2b, 2'b réalisée sous la forme d'un secteur. La face latérale de chaque disque 2 comporte aussi une encoche 2c, 2'c.

La partie inférieure du corps tubulaire 3 est pourvue d'un rebord annulaire 3a sur lequel repose le disque inférieur 2' par l'intermédiaire d'un joint torique 4. La face intérieure du corps 3 est pourvue d'un doigt 3b orienté vers le centre et qui pénètre dans l'encoche correspondante 2'c du disque 2', de telle sorte que ce dernier est immobilisé angulairement par rapport au corps 3.

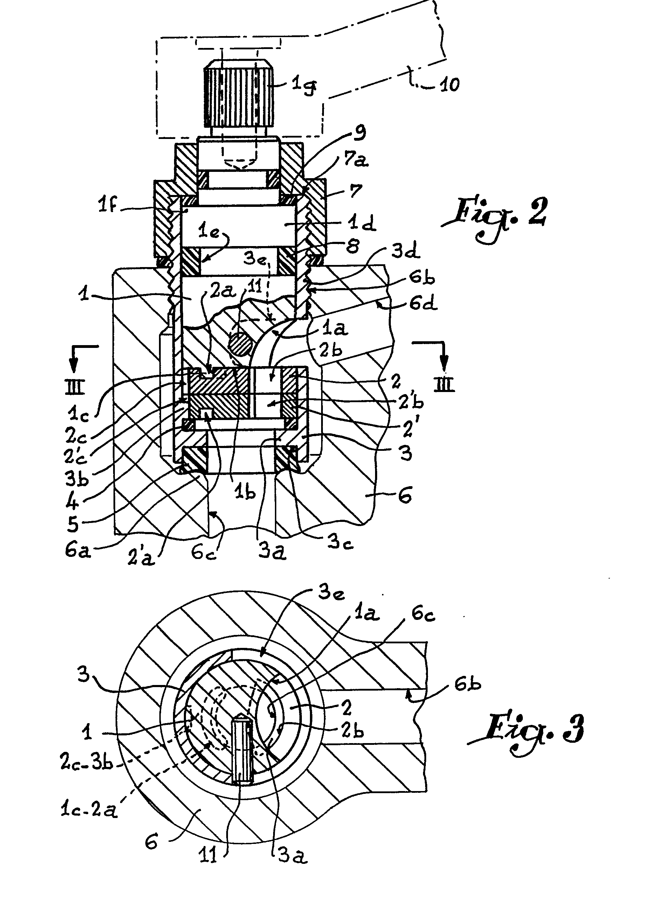

Bien entendu, la lumière 2'b du disque 2' se trouve en vis-à-vis de celle 2b du disque 2 lorsque le robinet est ouvert, comme illustré en fig. 2, l'emplacement du doigt 3b étant déterminé à cet effet. Le rebord 3a du corps tubulaire 3 se trouve au-dessus de l'extrémité inférieure de ce dernier afin de constituer une rainure annulaire 3c dans laquelle on engage un joint d'étanchéité 5 prévu également annulaire et qui vient prendre appui contre le siège 6a du corps 6 du robinet une fois que la partie supérieure filetée 3d du corps 3 est vissée dans l'entrée taraudée 6b du corps 6. On observe que cette partie filetée 3d reçoit un chapeau 7 qui vient entourer la partie haute du boisseau 1 pour appliquer ce dernier et les disques 2 et 2' contre le rebord 3a par l'intermédiaire du joint 4. Autrement dit, le montage de la tête de robinet s'effectue tout d'abord en mettant en place le joint 4 contre le rebord 3a, puis en plaçant le disque fixe 2' contre le joint avec le doigt 3b engagé dans l'encoche 2'c de ce disque, sa fente 2'a étant tournée vers le bas. Ainsi, toute la périphérie du disque fixe 2' est en appui contre

5

le joint 4, de sorte qu'il est parfaitement bien soutenu afin d'assurer une excellente étanchéité à ce niveau. Le second disque 2 est alors placé sur le premier en étant en position inverse, puis le boisseau est introduit dans le corps 3 afin que son pied 1c pénètre dans la fente 2a dudit disque. Le boisseau comporte une portée 1d qui forme une gorge 1e dans laquelle est engagée un joint d'étanchéité 8, et un épaulement 1f sur lequel on place une rondelle annulaire élastique 9. Lorsque le chapeau 7 est vissé à fond, c'est-à-dire quand son épaulement 7a porte contre l'extrémité de la partie 3d filetée de ce corps, l'épaulement en question repousse le boisseau en direction du bas, si bien qu'en déterminant exactement la compression du joint 9 et celle de celui 4, on définit précisément la force d'appui des deux disques l'un sur l'autre sans qu'intervienne la compression du joint 5 qui est uniquement déterminée par l'enfoncement du corps tubulaire 3 dans le corps 6 du robinet.

La présence du corps tubulaire 3 assure en même temps le guidage périphérique des disques et leur immobilisation.

Le corps tubulaire 3 comporte à la hauteur de l'entaille 1a du boisseau une ouverture latérale 3e s'étendant sur environ la moitié de la circonférence dudit corps, afin de permettre le passage du liquide provenant du canal 6c du corps 6 du robinet afin qu'il soit conduit vers son bec par un trou 6d en traversant le passage déterminé par les lumières 2b, 2'b en vis-à-vis.

Le boisseau comporte un embout cannelé 1g coopérant avec une clé de manoeuvre 10 illustrée en traits discontinus.

Un ergot 11 peut être associé à la face latérale du boisseau 1 pour limiter sa rotation en venant buter contre les deux extrémités de l'ouverture 3e du corps tubulaire 3. Bien entendu, cet ergot n'est pas obligatoire car le robinet peut aussi être manoeuvré dans le même sens de rotation pour le former et l'ouvrir.

6

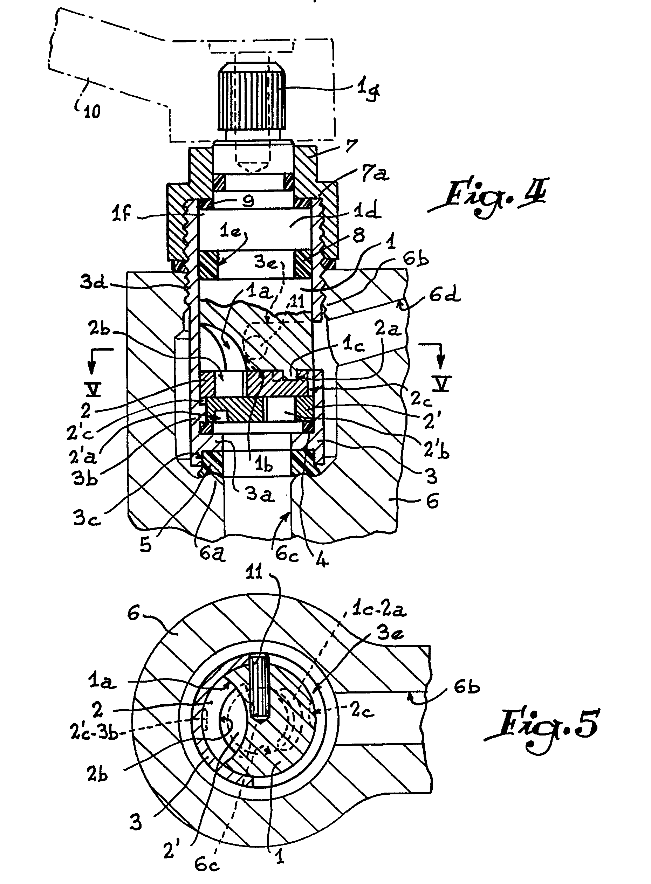

On a illustré en fig. 4 la position fermée du robinet dans laquelle les deux lumières 2b, 2'd sont décalées. On observe qu'alors l'ouverture 3e du corps tubulaire 3 est obturée par la partie du boisseau opposée à son entaille 3a qui est elle-même fermée par ledit corps.

Grâce à l'angle important du secteur qui détermine les lumières des disques, on obtient un bon recouvrement lorsque ces disques sont en position fermée, comme illustré en fig. 4, de sorte que la fermeture du flux de liquide s'effectue avec une grande tolérance. La forme de ces lumières assure une excellente progressivité du débit à faible ouverture et facilite le réglage du débit voulu. On notera aussi que la structure suivant l'invention permet d'avoir des disques de grand diamètre par rapport au filetage du chapeau 7.

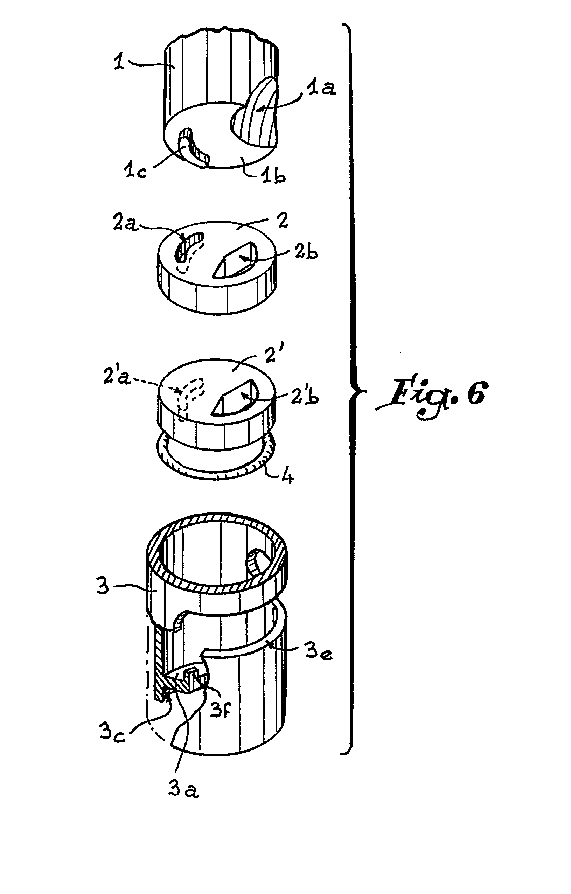

On a illustré en fig. 6 une autre forme d'exécution du corps tubulaire 3 dans lequel le rebord annulaire 3a comporte une saillie 3f de forme identique à celle du pied 1c de manière à supprimer les encoches 2c des disques 2.

En particulier, le pied du boisseau pourrait affecter d'autres formes ainsi que la fente de chaque disque et la saillie 3f du corps tubulaire 3. C'est ainsi qu'on a illustré en fig. 7 un pied constitué de deux pions 12, 13 tandis que chaque disque 2 comporte deux trous borgnes 14, 15 et que le rebord 3a du corps 3 est pourvu de deux tétons 16, 17 de manière que les trous borgnes du disque fixe 2' reçoivent lesdits tétons tandis que les pions 12 et 13 du boisseau 1 pénètrent dans les trous du disque supérieur 2.

Revendications

1. Tête de robinet du genre comportant deux disques (2, 2') de céramique dont l'un (2) est déplacé angulairement par rapport à l'autre (2') prévu fixe au moyen d'un boisseau (1) en vue de permettre ou d'empêcher le passage d'un liquide, caractérisée en ce que le disque fixe (2) repose par l'intermédiaire d'un joint d'étanchéité (4) contre un rebord annulaire (3a) ménagé à la base d'un corps tubulaire (3) dans lequel tourne le boisseau (1) et qui assure le serrage des disques (2, 2') l'un contre l'autre ainsi que leur guidage, et l'étanchéité sur le siège (6a) du corps du robinet au moyen d'un joint (5) engagé dans sa base.

2. Tête de robinet suivant la revendication 1, caractérisée en ce que les deux disques (2, 2') qui sont identiques comportent des lumières (2b, 2'b) en forme de secteur permettant une manoeuvre complète de fermeture et d'ouverture sur environ un demi-tour.

3. Tête de robinet suivant la revendication 1, caractérisée en ce que le corps tubulaire (3) comporte une ouverture latérale (3e) à travers laquelle s'écoule le liquide et qui est obturée par le boisseau (1) en position fermée du robinet.

4. Tête de robinet suivant la revendication 3, caractérisée en ce que le boisseau (1) comporte un ergot (11) qui limite son déplacement angulaire en venant buter contre les deux arêtes opposées de l'ouverture latérale (3e) du corps tubulaire (3).

5. Tête de robinet suivant la revendication 1, caractérisée en ce que la base du boisseau (1) comprend un moyen de liaison (1c) avec le disque tournant (2), le rebord annulaire (3a) du corps cylindrique (3) comportant le même moyen (3f) pour immobiliser angulairement le disque fixe (2').

8

6. Tête de robinet suivant la revendication 1, caractérisée en ce que les disques (2, 2') comportent une encoche latérale (2c, 2'c) dont celle du disque fixe reçoit une saillie (3b) du corps tubulaire, tandis qu'ils sont munis d'une fente (2a, 2'a) dont celle du disque tournant (2) reçoit un pied (1c) du boisseau (1).

0146480

1/4

Fig.1

Fig.7

Fig. 2

Fig. 3

0146480

*Fig. 4*

*Fig. 5*

*Fig. 6*

Office européen
des brevets

**RAPPORT DE RECHERCHE EUROPEENNE**

0146480
Numéro de la demande

EP 84 42 0191

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 495 266 (HANSA METALLWERKE) <br> * Page 4, ligne 18 - page 7, ligne 5; figures * | 1 | F 16 K 3/08 <br> F 16 K 27/04 |
| | --- | | |
| A | DE-A-3 145 863 (ARMATURENFABRIK WALLISELLEN) <br> * Page 11, dernier paragraphe - page 12; figures * | 1 | |
| | --- | | |
| A | EP-A-0 071 779 (GROHE ARMATURENFABRIK) <br> * Résumé; figures * | 1 | |
| | --- | | |
| A | FR-A-2 475 680 (KARRER, WEBER & CIE.) | | DOMAINES TECHNIQUES RECHERCHES (Int. Cl.4) |
| | --- | | |
| A | FR-A-2 485 682 (IDEAL-STANDARD) | | F 16 K |
| | --- | | |
| A | CH-A- 204 325 (RATHE) | | |
| | ----- | | |

Le présent rapport de recherche a été établi pour toutes les revendications

| Lieu de la recherche <br> LA HAYE | Date d'achèvement de la recherche <br> 14-02-1985 | Examinateur <br> VAN REETH A.L.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82